# EUROPÄISCHE PATENTANMELDUNG

(11) **EP 4 368 600 A1**
(43) Veröffentlichungstag der Anmeldung: **15.05.2024**
(21) Anmeldenummer: 22206294.5
(22) Anmeldetag: 09.11.2022
(51) Int. Cl.: C05D 9/00, C05F 11/02, C05G 5/30, A01G 24/15, A01G 24/20, C04B 41/00, C04B 41/45

(54) **BODENHILFSSTOFF, VERFAHREN ZUR HERSTELLUNG DES BODENHILFSSTOFFS, VERWENDUNG DES BODENHILFSSTOFFS SOWIE DEN BODENHILFSSTOFF UMFASSENDES SUBSTRAT**

(71) Anmelder: Knauf Performance Materials GmbH, 44147 Dortmund (DE)
(72) Erfinder: Mühlenweg, Dirk, 48157 Münster (DE)
(74) Vertreter: Berkenbrink, Kai-Oliver

(57) **Zusammenfassung**

Die Erfindung betrifft einen Bodenhilfsstoff, ein Verfahren zur Herstellung des Bodenhilfsstoffs, eine Verwendung des Bodenhilfsstoffs sowie ein den Bodenhilfsstoff umfassendes Substrat.

## Beschreibung

Die Erfindung betrifft einen Bodenhilfsstoff, ein Verfahren zur Herstellung des Bodenhilfsstoffs, eine Verwendung des Bodenhilfsstoffs sowie ein den Bodenhilfsstoff umfassendes Substrat.

Bodenhilfsstoffe sind Stoffe, die für die Kultur von Pflanzen verwendet werden. Diese können entweder allein verwendet werden oder alternativ Substraten oder Böden beigegeben werden.

Bei der Kultur von Pflanzen werden mit dem Begriff "Substrat" verschiedenste erdehaltige oder erdelose Stoffe oder Stoffgemische bezeichnet, die für die Kultur von Pflanzen dienen. Substrate in diesem Sinne sind mithin Stoffe beziehungsweise Stoffgemische, die Pflanzen als Wurzelraum dienen. Solche Substrate können insbesondere beispielsweise in Gefäße (beispielsweise in Blumentöpfe) oder in Böden (beispielsweise in Pflanzlöcher) eingebracht sein. Ferner können solche Substrate auch in bodenunabhängigen Anwendungen für die Kultur von Pflanzen verwendet werden, beispielsweise bei der Kultur von Pflanzen in Gewächshäusern, insbesondere bei der Kultur von Gemüsepflanzen in Gewächshäusern.

Substrate für die Kultur von Pflanzen sind in Form von erdehaltigen und erdelosen Substraten bekannt.

Erdelose Substrate bestehen beispielsweise aus einem oder mehreren mineralischen Komponenten.

Erdehaltige Substrate umfassen eine oder mehrere Erden und Beimischungen von einem oder mehreren Zuschlagstoffen. Erden für Substrate sind beispielsweise Torf oder Humus. Zuschlagstoffe für Substrate sind beispielsweise in Form von Sand, Lehm, Blähton oder Blähschiefer bekannt.

Mit "Bodenhilfsstoffen" werden Stoffe bezeichnet, die entweder alleine für die Kultur von Pflanzen verwendet oder als Zuschlagstoffe solchen Substraten beigemischt werden können, die aber auch unmittelbar zur Verbesserung von Böden in Böden eingebracht werden können. Bei solchen Bodenhilfsstoffen handelt es sich in der Regel um hochporöse, mineralische Stoffe, durch die die Durchlüftung und Drainage in Substraten beziehungsweise Böden verbessert werden kann. Nachteilig an solch mineralischen, porösen Bodenhilfsstoffen ist jedoch, dass diese keine Nährstoffe für Pflanzen zur Verfügung stellen können. Ferner sind Nährstoffe nicht oder nur begrenzt durch Bodenhilfsstoffe speicherbar, soweit die vorteilhafte Eigenschaft der Bodenhilfsstoffe zur Drainage und Durchlüftung nicht negativ beeinträchtigt werden sollen. So könnten Nährstoffe in organischen Substanzen zwar durch die Bodenhilfsstoffe gespeichert werden; allerdings können die Poren durch solch organische Substanzen verstopft werden, so dass die Eigenschaft der Bodenhilfsstoffe zur Luftführung und Drainage hierdurch negativ beeinträchtigt werden kann. Ferner wird die Porosität von Bodenhilfsstoffen durch Mineraldünger, insbesondere Stickstoffdünger, zwar in der Regel nicht negativ beeinträchtigt, allerdings können solche Mineraldünger praktisch nicht durch mineralische Bodenhilfsstoffe aufgenommen beziehungsweise gespeichert werden.

EP 3 469 890 A1 offenbart einen Bodenhilfsstoff, der Körner aus geblähtem Perlit umfasst, wobei auf die Körner aus geblähtem Perlit Huminsäuren in einer Konzentration von 0,1 bis 2 Masse-% aufgetragen sind. Es hat sich jedoch herausgestellt, dass ein solcher Bodenhilfsstoff schon nach kurzem Einsatz in feuchter Umgebung die Fähigkeit verliert, Stickstoff zu speichern und wieder abzugeben.

Der Erfindung liegt die Aufgabe zugrunde, einen Bodenhilfsstoff zur Verfügung zu stellen, der die Fähigkeit zur Aufnahme von Stickstoff besitzt. Insbesondere liegt der Erfindung die Aufgabe zugrunde, einen Bodenhilfsstoff zur Verfügung zu stellen, der eine lange andauernde Fähigkeit zur Aufnahme von Stickstoff besitzt, insbesondere auch in feuchter Umgebung. Insbesondere soll der Bodenhilfsstoff diese Fähigkeit länger besitzen als die aus dem Stand der Technik bekannten Bodenhilfsstoffe.

Ferner liegt der Erfindung die Aufgabe zugrunde, einen solchen Bodenhilfsstoff in Form eines mineralischen, porösen Bodenhilfsstoffs zur Verfügung zu stellen.

Ferner liegt der Erfindung die Aufgabe zugrunde, einen solchen Bodenhilfsstoff zur Verfügung zu stellen, der die Fähigkeit zur Aufnahme von Stickstoff besitzt, ohne dass hierdurch die Fähigkeit des Bodenhilfsstoffs zur Luftführung und Drainage negativ beeinträchtigt wird.

Ferner liegt der Erfindung die Aufgabe zugrunde, einen solchen Bodenhilfsstoff zur Verfügung zu stellen, der für den Anbau von Nutzpflanzen, die als Nahrungsmittel oder Genussmittel Verwendung finden, geeignet ist. Insbesondere soll der Bodenhilfsstoff bei seiner Verwendung als Bodenhilfsstoff zur Kultur von Nutzpflanzen keinerlei Stoffe, die den Geschmack oder die Genießbarkeit solcher Nutzpflanzen negativ beeinträchtigen können, abgeben.

Ferner liegt der Erfindung die Aufgabe zugrunde, ein Verfahren zur Herstellung eines solchen Bodenhilfsstoffs zur Verfügung zu stellen.

Ferner liegt der Erfindung die Aufgabe zugrunde, ein einen solchen Bodenhilfsstoff umfassendes Substrat zur Verfügung zu stellen.

Zur Lösung dieser Aufgaben wird erfindungsgemäß zur Verfügung gestellt ein Bodenhilfsstoff, umfassend die folgenden Merkmale:
Körner aus geblähtem Perlit;
die Körner aus geblähtem Perlit umfassen Körner aus geblähtem Perlit, die mit Huminsäure beschichtet sind;
die mit Huminsäure beschichteten Körner aus geblähtem Perlit umfassen Körner aus geblähtem Perlit, die in hoher Konzentration mit Huminsäure beschichtet sind, und bei denen die Huminsäure die Oberfläche der Körner aus geblähtem Perlit vollständig bedeckt und bei denen die Huminsäure in einer Konzentration von wenigstens 3 Masse-% vorliegt, bezogen auf die Masse der Körner aus geblähtem Perlit, die in hoher Konzentration mit Huminsäure beschichtet sind.

Überraschend hat sich erfindungsgemäß herausgestellt, dass die vorstehenden Aufgaben gelöst werden können durch einen Bodenhilfsstoff, der Körnern aus geblähtem Perlit umfasst, auf die Huminsäure in einer Konzentration von wenigstens 3 Masse-% aufgetragen ist.

Überraschend hat sich im Rahmen der Erfindung herausgestellt, dass die mangelnde Fähigkeit zur dauerhaften Aufnahme von Stickstoff, insbesondere in feuchter Umgebung, bei dem aus dem Stand der Technik bekannten, mit Huminsäure beschichtetem geblähten Perlit der Höhe der Konzentration der Huminsäure geschuldet ist. So hat sich erfindungsgemäß überraschend herausgestellt, dass die Dauerhaftigkeit beziehungsweise Fähigkeit zum Verbleib der Huminsäure auf dem damit beschichteten geblähten Perlit, und zwar insbesondre in feuchter Umgebung, nicht linear mit der Höhe der Konzentration von Huminsäure korreliert, sondern oberhalb einer Konzentration von 2 % stark zunimmt und insbesondere ab einer Konzentration von 3 % sprunghaft ansteigt. Worauf dieser Effekt beruht, konnte noch nicht abschließend geklärt werden. Die Erfinder vermuten, dass geblähter Perlit oberflächenaktive Eigenschaften aufweist, die ab einer Konzentration der Huminsäure von etwa 2 bis 3 % in eine solche Wechselwirkung mit der Huminsäure treten, dass die Huminsäure besser und dauerhafter an dem geblähten Perlit haftet. Diese verbesserte Dauerhaftigkeit beziehungsweise Haftung der Huminsäure am geblähten Perlit geht jedoch auch mit einer verbesserten Aufnahme von Stickstoff durch den mit Huminsäure beschichteten geblähten Perlit einher, so dass der erfindungsgemäße Bodenhilfsstoff eine hervorragende Fähigkeit zur dauerhaften Speicherung und Abgabe von Stickstoff in feuchter Umgebung besitzt.

Ein weiterer sprunghafter Anstieg der Dauerhaftigkeit beziehungsweise Fähigkeit zum Verbleib der Huminsäure in dem damit beschichteten geblähten Perlit konnte ab einer Konzentration von 5 Masse-% festgestellt werden, so dass die Huminsäure besonders bevorzugt in einer Konzentration von wenigstens 5 Masse-% vorliegt, bezogen auf die Masse der Körner aus geblähtem Perlit, die in hoher Konzentration mit Huminsäure beschichtet sind.

Die "Masse der Körner aus geblähtem Perlit, die in hoher Konzentration mit Huminsäure beschichtet sind" bezeichnet hierin die Gesamtmasse aus den Körnern aus geblähtem Perlit einschließlich der Masse der Huminsäure, mit der die Körner beschichtet sind.

Ein Abfall der Dauerhaftigkeit beziehungsweise Fähigkeit zum Verbleib der Huminsäure in dem damit beschichteten geblähten Perlit konnte ab einer Konzentration von 20 Masse-% und noch verstärkter ab 30 Masse-% festgestellt werden, so dass nach einer Ausführungsform vorgesehen ist, dass die Huminsäure in einer Konzentration im Bereich von 3 bis 30 Masse-% vorliegt, bevorzugter in einer Konzentration im Bereich von 5 bis 30 Masse-% und noch bevorzugter in einer Konzentration im Bereich von 5 bis 20 Masse-%, jeweils bezogen auf die Masse der Körner aus geblähtem Perlit, die in hoher Konzentration mit Huminsäure beschichtet sind.

Mit "Stickstoff" werden hierin Stickstoff und Stickstoffionen sowie stickstoffhaltige Verbindungen, die das Pflanzenwachstum fördern, beispielsweise Nitrat, bezeichnet.

Bei geblähtem Perlit handelt es sich bekanntermaßen um einen inerten, hochporösen mineralischen Stoff. Auf Grund dieser Eigenschaften eignet sich geblähter Perlit hervorragend als Bodenhilfsstoff zur Verbesserung der Luftführung und Drainage in einem Substrat oder in einem Boden.

Durch den Auftrag von Huminsäuren auf geblähten Perlit wird dessen Fähigkeit zur Luftführung und Drainage praktisch nicht beeinträchtigt.

Der geblähte Perlit, auf den erfindungsgemäß Huminsäure aufgetragen ist, besitzt die Fähigkeit, Stickstoff zu speichern und langsam wieder abzugeben, insbesondere in feuchter Umgebung. Hierdurch wirkt der erfindungsgemäße Bodenhilfsstoff als "Puffer" für Stickstoff, der aufgenommenen Stickstoff langsam wieder an die Umgebung beziehungsweise das umgebende Substrat oder das umgebende Erdreich abgeben kann. Dies gibt Pflanzen, die unter Verwendung des erfindungsgemäßen Bodenhilfsstoffes kultiviert werden, ausreichend Zeit, den vom erfindungsgemäßen Bodenhilfsstoff verzögert wieder abgegebenen Stickstoff aufzunehmen.

Durch den erfindungsgemäßen Bodenhilfsstoff wird die Qualität von Nutzpflanzen nicht negativ beeinträchtigt, soweit der Bodenhilfsstoff, beispielsweise in einem Substrat, zur Kultur von Pflanzen verwendet wird. Insoweit ist auch relevant, dass Huminsäuren ein natürlicher Bestandteil von Böden sind und daher keinerlei negative Auswirkungen auf Pflanzen ausüben.

Mit "Huminsäure" werden hierin ganz allgemein solch hochmolekulare, chemische Verbindungen bezeichnet, die sich aus abgestorbenem Pflanzenmaterial im Zuge der Humusbildung in Böden durch Humifizierung bilden.

Nach einer besonders bevorzugten Ausführungsform ist Huminsäure auf Basis von Leonardit vorgesehen. Überraschend hat sich erfindungsgemäß herausgestellt, dass nicht alle Huminsäuren gleichermaßen dazu geeignet sind, auf geblähtem Perlit eine dauerhafte Beschichtung mit der Fähigkeit zur dauerhaften Aufnahme und Abgabe von Stickstoff zu bilden, sondern dass Huminsäure auf Basis von Leonardit hierzu in besonderer Weise geeignet ist.

Soweit der geblähte Perlit mit Huminsäure "beschichtet" ist, ist hiermit zum Ausdruck gebracht, dass die Huminsäure auf die Oberfläche des geblähten Perlits aufgetragen ist beziehungsweise dass die Oberfläche des geblähten Perlits eine Schicht aus Huminsäure aufweist. Bei den Körnern aus geblähtem Perlit, die in hoher Konzentration mit Huminsäure beschichtet sind, ist die Oberfläche der Körner aus geblähtem Perlit vollständig mit Huminsäure bedeckt. Die "Oberfläche" des geblähten Perlits ist die gesamte Oberfläche des geblähten Perlits, also sowohl seine äußere Oberfläche (also die von außen sichtbare Oberfläche) als auch seine innere Oberfläche (also die von seinen offenen Poren gebildete Oberfläche). Aufgrund der hohen offenen Porosität von geblähtem Perlit weist dieser eine große innere Oberfläche auf, so dass der erfindungsgemäße Bodenhilfsstoff eine besonders hohe Fähigkeit zur Aufnahme von Stickstoff besitzt, wenn auf die gesamte Oberfläche des geblähten Perlits Huminsäure aufgetragen ist beziehungsweise die Oberfläche des geblähten Perlits vollständig mit Huminsäure beschichtet ist.

Nach einer besonders bevorzugten Ausführungsform liegt die Huminsäure in Form von wasserlöslicher Huminsäure vor.

Der Vorteil solch wasserlöslicher Huminsäure liegt insbesondere auch darin, dass solch wasserlösliche Huminsäure besonders einfach auf die Körner aus geblähtem Perlit aufgetragen werden kann. Beispielsweise kann wasserlösliche Huminsäure ganz einfach dadurch auf den geblähten Perlit aufgetragen werden, dass die wasserlösliche Huminsäure in Wasser gelöst und diese Lösung anschließend auf den geblähten Perlit aufgetragen wird. Vorteilhaft an einem solch wässrigen Lösungsmittel ist ferner, dass durch dieses der Geschmack und die Genießbarkeit von Nutzpflanzen, die unter Verwendung des erfindungsgemäßen Bodenhilfsstoffs kultiviert werden, nicht negativ beeinträchtigt werden.

Bevorzugt liegen wenigstens 90 Masse-% der Körner aus geblähtem Perlit, die in hoher Konzentration mit Huminsäure beschichtet sind, in einer Korngröße unter 8 mm und noch bevorzugter unter 6 mm vor. Nach einer besonders bevorzugten Ausführungsform ist vorgesehen, dass die Körner aus geblähtem Perlit, die in hoher Konzentration mit Huminsäure beschichtet sind, zu wenigstens 90 Masse-% in einer Korngröße zwischen 0,5 mm und 6 mm vorliegen, bezogen auf die Masse der Körner aus geblähtem Perlit, die in hoher Konzentration mit Huminsäure beschichtet sind. Erfindungsgemäß hat sich herausgestellt, dass Huminsäure besonders dauerhaft, insbesondere auch in feuchter Umgebung, auf geblähtem Perlit mit einer Korngröße im Bereich von 0,5 bis 6 mm haftet. Die Korngröße ist bestimmt gemäß DIN EN 933-1:2012-03.

Der geblähte Perlit weist bevorzugt eine Schüttdichte im Bereich von 60 bis 120 kg/m³ und besonders bevorzugt eine Schüttdichte von etwa 90 kg/m³ auf, bestimmt gemäß der DIN EN 12580:2014-02.

Erfindungsgemäß hat sich herausgestellt, dass die vorteilhaften Eigenschaften des erfindungsgemäßen Bodenhilfsstoffs, also insbesondere seine guten Durchlüftungs- und Drainageeigenschaften bei seiner gleichzeitig hohen Fähigkeit zur Aufnahme von Stickstoff, negativ beeinträchtigt werden können, wenn der Bodenhilfsstoff neben geblähtem Perlit, Huminsäuren und gegebenenfalls Wasser weitere Komponenten umfasst.

Insofern hat sich erfindungsgemäß herausgestellt, dass insbesondere verrottbare Substanzen, vor allem verrottbares pflanzliches Material, die Durchlüftungs- und Drainageeigenschaften des geblähten Perlits negativ beeinträchtigen können.

Nach einer bevorzugten Ausführungsform ist daher vorgesehen, dass der erfindungsgemäße Bodenhilfsstoff verrottbare Substanzen, insbesondere verrottbares pflanzliches Material, in einen Anteil unter 10 Masse-% umfasst, bevorzugter in einem Anteil unter 5 Masse-% und noch bevorzugter in einem Anteil unter 1 Masse-%, jeweils bezogen auf die Gesamtmasse an geblähtem Perlit, Huminsäuren und, soweit vorhanden, Wasser. Nach einer bevorzugten Ausführungsform weist der erfindungsgemäße Bodenhilfsstoff keinerlei verrottbare Substanzen, insbesondere kein verrottbares pflanzliches Material auf. Ein besonderer Vorteil eines erfindungsgemäßen Bodenhilfsstoffs, der solch geringe oder keinen Anteil an verrottbaren Substanzen aufweist, liegt insbesondere auch darin, dass dieser praktisch unbegrenzt lagerbar ist. Ein weiterer Vorteil eines erfindungsgemäßen Bodenhilfsstoffs, der solch geringe oder keinen Anteil an verrottbaren Substanzen aufweist, liegt ferner darin, dass dieser als Bodenhilfsstoff für praktisch jedes Substrat universell einsetzbar ist, da der Bodenhilfsstoff die Organik des Substrats praktisch nicht beeinflusst.

Nach einer bevorzugten Ausführungsform ist vorgesehen, dass der erfindungsgemäße Bodenhilfsstoff Erden (also Erdböden beziehungsweise Böden), in einen Anteil unter 10 Masse-% umfasst, bevorzugter in einem Anteil unter 5 Masse-% und noch bevorzugter in einem Anteil unter 1 Masse-%, jeweils bezogen auf die Gesamtmasse aus geblähtem Perlit, Huminsäure und, soweit vorhanden, Wasser. Nach einer bevorzugten Ausführungsform weist der erfindungsgemäße Bodenhilfsstoff keinerlei Erden auf, liegt also als erdenloser Bodenhilfsstoff vor.

Nach einer Ausführungsform ist vorgesehen, dass der erfindungsgemäße Bodenhilfsstoff zu wenigstens 90 Masse-%, bevorzugter zu wenigstens 95 Masse-% und noch bevorzugter zu wenigstens 99 Masse-% ausschließlich aus geblähtem Perlit, Huminsäure und, soweit vorhanden, Wasser besteht, jeweils bezogen auf die Gesamtmasse aus geblähtem Perlit, Huminsäure und, soweit vorhanden, Wasser.

Insofern kann entsprechend vorgesehen sein, dass der Bodenhilfsstoff neben geblähtem Perlit, Huminsäure und gegebenenfalls Wasser weitere Substanzen in einem Anteil unter 10 Masse-% aufweist, bevorzugter in einem Anteil unter 5 Masse-%, noch bevorzugter in einem Anteil unter 1 Masse-%, jeweils bezogen auf die Gesamtmasse aus geblähtem Perlit, Huminsäure und, soweit vorhanden, Wasser.

Nach einer Ausführungsform besteht der erfindungsgemäße Bodenhilfsstoff ausschließlich aus geblähtem Perlit, Huminsäure und gegebenenfalls Wasser.

Erfindungsgemäß hat sich herausgestellt, dass der erfindungsgemäße Bodenhilfsstoff in reiner Form zur Kultur beziehungsweise Aufzucht von Pflanzen verwendet werden kann. Gegenstand der Erfindung ist insoweit auch die Verwendung des erfindungsgemäßen Bodenhilfsstoffs als Substrat für Pflanzen, also als Substrat beziehungsweise Kultursubstrat für die Kultur beziehungsweise die Aufzucht von Pflanzen. Der erfindungsgemäße Bodenhilfsstoff wird insoweit als erdeloses Substrat für die Kultur von Pflanzen beziehungsweise als Wurzelraum für Pflanzen verwendet. Bevorzugt kann diese erfindungsgemäße Verwendung mit der Maßgabe erfolgen, dass der Bodenhilfsstoff als Substrat für die Kultur beziehungsweise Aufzucht wenigstens einer der folgenden Pflanzen verwendet wird: Gurken, Tomaten, Paprika, Rosmarin, Rosen, Anturien oder Gerbera.

Erfindungsgemäß wurde festgestellt, dass durch den erfindungsgemäßen Bodenhilfsstoff die Mikrobiologie aktiviert werden kann. Insoweit aktiviert der erfindungsgemäße Bodenhilfsstoff das Wachstum von Mikroorganismen, wie beispielsweise Pilzen oder Bakterien. Soweit der Bodenhilfsstoff daher erfindungsgemäß als erdenloses Substrat verwendet wird, können sich auf diesem schon nach verhältnismäßig kurzer Zeit Mikroorganismen, die das Pflanzenwachstum fördern, ansiedeln.

Erfindungsgemäß hat sich herausgestellt, dass sich das Einbringen des erfindungsgemäßen Bodenhilfsstoffs in natürliche (also gewachsene beziehungsweise in der Natur vorliegende) Böden sehr vorteilhaft auf das Wachstum von Pflanzen in diesen Böden auswirken kann. Insbesondere kann sich das Einbringen des erfindungsgemäßen Bodenhilfsstoffs sehr vorteilhaft auf das Wachstum von Pflanzen in nährstoffarmen, beispielsweise ariden Böden auswirken. Dies liegt offenbar nicht nur an der Fähigkeit des Bodenhilfsstoffs, Stickstoff zu speichern und verzögert wieder abzugeben, sondern offenbar insbesondere auch an der vorstehenden Eigenschaft, die Mikrobiologie zu aktivieren. Insoweit ist ein Gegenstand der Erfindung die Verwendung des erfindungsgemäßen Bodenhilfsstoffs als Bodenhilfsstoff in natürlichen Böden, beispielsweise in nährstoffarmen Böden oder beispielsweise zur Bodenverbesserung bei Rasenanlagen oder Gehölzflächen. Diese Verwendung kann mit der Maßgabe erfolgen, dass der Bodenhilfsstoff in den Boden eingebracht wird. Insbesondere kann vorgesehen sein, dass der Bodenhilfsstoff in einer Masse im Bereich von 1 bis 5 kg pro Quadratmeter Boden, besonders bevorzugt in einer Masse im Bereich von 1,5 bis 3 kg pro Quadratmeter Boden in den Boden eingebracht wird.

Nach einer alternativen Ausführungsform kann der erfindungsgemäße Bodenhilfsstoff auch sehr vorteilhaft als Zuschlagstoff für Substrate verwendet werden. In diesen Substraten kann der erfindungsgemäße Bodenhilfsstoff, wie zuvor ausgeführt, insbesondere zur Verbesserung der Drainage und Luftführung bei gleichzeitiger Fähigkeit zur Aufnahme beziehungsweise zum Puffern von Stickstoff verwendet werden. Gegenstand der Erfindung ist insoweit auch die Verwendung des erfindungsgemäßen Bodenhilfsstoffs als Komponente in einem Substrat. Ein Substrat in diesem Sinne ist, wie oben ausgeführt, ein Substrat für die Kultur beziehungsweise Aufzucht von Pflanzen, also insbesondere ein Substrat, das Pflanzen als Wurzelraum dient.

Gegenstand der Erfindung ist ferner insoweit ein Substrat, welches einen erfindungsgemäßen Bodenhilfsstoff umfasst.

Ein solches Substrat kann neben dem erfindungsgemäßen Bodenhilfsstoff einen oder mehrere weitere Komponenten umfassen, die aus dem Stand der Technik als Komponenten für Substrate bekannt sind. Bei diesen weiteren Komponenten kann es sich beispielsweise um mineralische Komponenten, um organische Komponenten oder um ein Gemisch aus solch mineralischen und organischen Komponenten handeln. Organische Komponenten können beispielsweise in Form wenigstens einer der Stoffe Torf, Humus, Holzfasern, Rinde oder Kokosfasern vorliegen. Mineralische Komponenten können beispielsweise in Form wenigstens einer der Stoffe Sand, Lehm, Ton, Blähton oder Kalk vorliegen.

Je nach Zusammensetzung und beabsichtigter Verwendung des Substrats kann der Bodenhilfsstoff in diesem in unterschiedlichen Anteilen vorliegen.

In einer allgemeinen Ausführungsform kann bevorzugt vorgesehen sein, dass der erfindungsgemäße Bodenhilfsstoff in einem Anteil im Bereich von 1 bis 50 Volumen-%, bezogen auf das Gesamtvolumen des Substrats, in dem Substrat vorliegt, noch bevorzugter in einem Anteil im Bereich von 5 bis 40 Volumen -%.

Nach einer Ausführungsform umfasst das Substrat neben dem erfindungsgemäßen Bodenhilfsstoff wenigstens eine der folgenden weiteren Komponenten: Holzfasern, Rinde oder Kokosfasern. Ein solches Substrat kann bevorzugt für Topfkräuter verwendet werden, beispielsweise Topfkräuter in Form von Basilikum, Schnittlauch, Petersilie oder Kresse. Bei dieser Ausführungsform kann der erfindungsgemäße Bodenhilfsstoff bevorzugt in einem Anteil im Bereich von 5 bis 20 Volumen-%, besonders bevorzugt in einem Anteil im Bereich von 10 bis 15 Volumen-% im Substrat vorliegen. Die weiteren Komponenten können bevorzugt in einem Anteil im Bereich von 80 bis 95 Volumen-%, besonders bevorzugt in einem Anteil im Bereich von 85 bis 90 Volumen-% im Substrat vorliegen. Die vorgemachten Angaben in Volumen-% sind jeweils bezogen auf das Gesamtvolumen des Substrats.

Nach einer Ausführungsform umfasst das Substrat neben dem erfindungsgemäßen Bodenhilfsstoff wenigstens eine der folgenden weiteren Komponenten: Torf oder Humus, besonders bevorzugt Torf. Ein solches Substrat kommt für die Kultur verschiedenster Pflanzen in Frage.

Bei dieser Ausführungsform kann der erfindungsgemäße Bodenhilfsstoff bevorzugt in einem Anteil im Bereich von 10 bis 40 Volumen-%, besonders bevorzugt in einem Anteil im Bereich von 20 bis 30 Volumen-% im Substrat vorliegen. Die weiteren Komponenten können bevorzugt in einem Anteil im Bereich von 60 bis 90 Volumen-%, besonders bevorzugt in einem Anteil im Bereich von 70 bis 80 Volumen-% im Substrat vorliegen. Die vorgemachten Angaben in Volumen-% sind jeweils bezogen auf das Gesamtvolumen des Substrats.

Die hierin gemachten Angaben zu Anteilen in Volumen-% sind bestimmt gemäß DIN EN 12580:2014-02.

Gegenstand der Erfindung ist auch ein Verfahren zur Herstellung des erfindungsgemäßen Bodenhilfsstoffs.

Das Verfahren zur Herstellung des Bodenhilfsstoffs umfasst die folgenden Schritte:
Zur Verfügungstellung von Körnern aus geblähtem Perlit;
zur Verfügungstellung eines Behälters zur Aufnahme einer Flüssigkeit;
zur Verfügungstellung einer Huminsäure umfassenden Flüssigkeit in dem Behälter;
Einführen der Körner aus geblähtem Perlit in die Flüssigkeit;
Verweilenlassen der Körner aus geblähtem Perlit in der Flüssigkeit;
Ausführen der der Körner aus geblähtem Perlit aus der Flüssigkeit.

Durch das Verweilenlassen der Körner aus geblähtem Perlit in der Flüssigkeit können die Körner aus geblähtem Perlit, die erfindungsgemäß in hoher Konzentration mit Huminsäure beschichtet sind, zur Verfügung gestellt werden.

Erfindungsgemäß hat sich herausgestellt, dass durch die bislang aus dem Stand der Technik bekannten Verfahren zur Auftragen einer Beschichtung auf geblähten Perlit, insbesondere die bekannten Verfahren zum Mischen von Perlit und Beschichtungsmittel sowie Verfahren, bei denen Beschichtungsmittel auf den geblähten Perlit gespritzt, gesprüht, verdüst oder vernebelt werden, nicht dazu geeignet sind, Huminsäure in einer erfindungsgemäßen Konzentration auf den geblähten Perlit aufzubringen. Erst durch das erfindungsgemäße Verfahren, bei dem man die Körner aus geblähtem Perlit in einer Huminsäure umfassenden Flüssigkeit verweilen lässt, um die Körner aus geblähtem Perlit mit Huminsäure zu beschichten, war eine technische Möglichkeit geschafften, Körner aus geblähtem Perlit mit einer erfindungsgemäß hohen Konzentration mit Huminsäure zu beschichten.

Grundsätzlich wird das Verfahren besonders bevorzugt derart durchgeführt, dass hierdurch der erfindungsgemäße Bodenhilfsstoff mit den hierin beschriebenen Merkmalen erhalten wird.

Um die Huminsäure auf den geblähten Perlit aufzutragen, wird Huminsäure bevorzugt in Form von wasserlösliche Huminsäure zur Verfügung gestellt, insbesondere in Form der zuvor beschriebenen, wasserlöslichen Huminsäure.

In dieser Form wird die Huminsäure für das Verfahren zur Verfügung gestellt.

Als vorteilhaft hat es sich insoweit herausgestellt, wenn die Huminsäure umfassenden Flüssigkeit als wässrige Lösung von Huminsäure mit einer Konzentration der Huminsäure im Bereich von 9 Masse-% bis 17 Masse-% zur Verfügung gestellt werden, bezogen auf die Gesamtmasse der wässrigen Lösung, also der Gesamtmasse aus Wasser und Huminsäure. Erfindungsgemäß hat sich herausgestellt, dass bei einem Verweilenlassen der Körner aus geblähtem Perlit in einer solchen Flüssigkeit beziehungsweise Lösung, in der Huminsäure in einer solchen Konzentration vorliegt, die oben bezeichneten hohen Konzentrationen von Huminsäuren auf dem Perlit erreicht werden kann.

Besonders bevorzugt tauchen die Körner aus geblähtem Perlit während des Verweilenlassens in der Flüssigkeit vollständig in die Flüssigkeit ein.

Nach einer bevorzugten Ausführungsform werden die Körner aus geblähtem Perlit während des Verweilenlassens in der Flüssigkeit in der Flüssigkeit bewegt, beispielsweise durch ein Rührwerk.

Bevorzugt lässt man die Körner aus geblähtem Perlit zumindest für eine solche Dauer in der Flüssigkeit verweilen, bis die vollständige Sättigungsfeuchte der Körner, also die maximal mögliche Aufnahme von Flüssigkeit durch die Körner, erreicht ist.

Bevorzugt lässt man die Körner aus geblähtem Perlit für eine Dauer von wenigstens 3 Minuten, besonders bevorzugt für eine Dauer im Bereich von 3 bis 10 Minuten, in der Flüssigkeit verweilen. Erfindungsgemäß hat sich herausgestellt, dass innerhalb dieser Zeit eine vollständige Sättigungsfeuchte der Körner erreichbar ist.

Nach dem Verweilenlassen der Körner aus geblähtem Perlit in der Flüssigkeit werden die Körner aus geblähtem Perlit aus der Flüssigkeit entnommen, beispielsweise mittels einer Förderschnecke.

Der für das Verfahren zur Verfügung gestellte geblähte Perlit weist bevorzugt die oben bezeichnete Korngröße beziehungsweise Korngrößenverteilung auf.

Anschließend können die Körner als Bodenhilfsstoff zur Verfügung gestellt und verwendet werden.

Nach einer bevorzugten Ausführungsform wird der durch das erfindungsgemäße Verfahren erhaltene Bodenhilfsstoff, insbesondere der erfindungsgemäße Bodenhilfsstoff, weiter derart bearbeitet, dass ein Substrat erhalten wird. Hierzu kann das erfindungsgemäße Verfahren bevorzugt die folgenden weiteren Schritte umfasst:
Zur Verfügungstellung wenigstens einer Komponente für ein Substrat;
Mischen des Bodenhilfsstoffs und der wenigstens einen Komponente zum Erhalt eines Substrats.

Mithin wird zur Herstellung eines Substrats wenigstens eine Komponente zur Verfügung gestellt, die zur Herstellung eines Substrates verwendbar ist. Bei diesen Komponenten kann es sich insbesondere um einen oder mehrere Komponenten handeln, die aus dem Stand der Technik als Komponenten für Substrate bekannt sind. Insbesondere kann es sich bei diesen Komponenten um eine oder mehrere der oben genannten, weiteren Komponenten für Substrate handeln, also insbesondere um mineralische Komponenten, um organische Komponenten oder um ein Gemisch aus solch mineralischen und organischen Komponenten. Organische Komponenten können beispielsweise in Form wenigstens einer der Stoffe Torf, Humus, Holzfasern, Rinde oder Kokosfasern zur Verfügung gestellt werden. Mineralische Komponenten können beispielsweise in Form wenigstens einer der Stoffe Sand, Lehm, Ton, Blähton oder Kalk zur Verfügung gestellt werden.

Der durch das erfindungsgemäße Verfahren erhaltene Bodenhilfsstoff wird nunmehr zum Erhalt eines Substrates mit einem oder mehreren dieser Komponenten gemischt. Besonders bevorzugt werden der Bodenhilfsstoff und die wenigstens eine Komponente derart gemischt, dass eines der oben genannten, erfindungsgemäßen Substrate erhalten wird.

Weitere Merkmale der Erfindung ergeben sich aus den Ansprüchen und dem nachfolgenden Ausführungsbeispiel der Erfindung.

Sämtliche Merkmale der Erfindung können, einzeln oder in Kombination, beliebig miteinander kombiniert sein.

### Ausführungsbeispiel

### Verfahren

Es wurden zur Verfügung gestellt Körner aus geblähtem Perlit mit einer Korngröße im Bereich von >0 bis 6 mm, wobei die Korngröße bestimmt war gemäß DIN EN 13055-1. 90 Masse-% der Körner aus geblähtem Perlit lagen in einer Korngröße zwischen 0,5 und 6 mm und 85 Masse-% des geblähten Perlits lagen mit einer Korngröße im Bereich von 1 bis 5 mm vor, jeweils bezogen auf die Masse der Körner aus geblähtem Perlit. Die Schüttdichte des geblähten Perlits gemäß DIN EN 12580:2014-02 betrug 90 kg/m³.

Ferner wurde zur Verfügung gestellt ein zur Aufnahme einer Flüssigkeit geeigneter Stahlbehälter aus Edelstahl, in dem ein motorisch antreibbares Rührwerk angeordnet war.

Schließlich wurde zur Verfügung gestellt eine Huminsäure umfassende Flüssigkeit in Form einer wässrigen Lösung von Leonardit in einer Konzentration von 14 Masse-%. Die wässrige Lösung von Leonardit wurde in dem Behälter zur Verfügung gestellt.

Bei der Durchführung des Verfahrens wurden die Körner aus geblähtem Perlit zunächst über eine motorisch angetriebene Zellenradschleuse in die Flüssigkeit eingeführt. Anschließend wurde das Rührwerk aktiviert und die in der Flüssigkeit befindlichen Körner hierdurch bewegt. Während dieser Bewegung waren sämtliche in der Flüssigkeit befindlichen Körner vollständig in die Flüssigkeit eingetaucht. Nach Abstellen des Rührwerks wurden die Körner mittels einer Förderschnecke aus der Flüssigkeit ausgeführt. Die Gesamtverweilzeit der Körner aus geblähtem Perlit in der Flüssigkeit betrug etwa 5 Minuten.

Anschließend lagen die Körner aus geblähtem Perlit in einer Ausführungsform des erfindungsgemäßen Bodenhilfsstoffs vor.

### Bodenhilfsstoff

Der durch das Verfahren erhaltene Bodenhilfsstoff lag in Form eines Ausführungsbeispieles eines erfindungsgemäßen Bodenhilfsstoffs vor. Bei diesem Ausführungsbeispiel des erfindungsgemäßen Bodenhilfsstoffs bestand der Bodenhilfsstoff ausschließlich aus Körnern aus geblähtem Perlit, deren Oberfläche vollständig mit Huminsäure beschichtet war. Die Huminsäure lag in einer Konzentration von 12,5 Masse-% vor, bezogen auf die Masse der Körner aus geblähtem Perlit, die entsprechend mit Huminsäure beschichtet waren.

90 Masse-% der Körner aus geblähtem Perlit lagen in einer Korngröße zwischen 0,5 und 6 mm und 85 Masse-% des geblähten Perlits lagen mit einer Korngröße im Bereich von 1 bis 5 mm vor, bezogen auf die Masse der Körner aus geblähtem Perlit, die entsprechend mit Huminsäure beschichtet waren.

Durch die Beschichtung mit der Huminsäure wiesen die Körner aus geblähtem Perlit eine dunkelbraune bis schwarze Färbung auf.

Um die Dauerhaftigkeit beziehungsweise Haftung der Huminsäure auf dem geblähten Perlit auch in feuchter Umgebung zu testen, wurde ein Teil des Bodenhilfsstoffs auf einen Filter gelegt und mit einer Pipette mit 5 Tropfen Wasser je Korn beaufschlagt. Nach Beendigung der Beaufschlagung mit Wasser wies der Bodenhilfsstoff noch eine dunkelbraune bis schwarze Färbung auf, was die verbleibende Beschichtung mit Huminsäure indizierte.

### Verwendung

Der vorbezeichnete Bodenhilfsstoff wurde für ein Substrat für die Kultur von Tomaten und Rosmarin verwendet.

Um den Einfluss dieses Substrats auf das Wachstum der Pflanzen bestimmen zu können, wurden Wachstumsversuche wie folgt durchgeführt.

Der gemäß dem vorbezeichneten Ausführungsbeispiel erhaltene Bodenhilfsstoff wurde zu zwei verschiedenen Substraten gemischt. Zum einen wurde der Bodenhilfsstoff mit einer torffreien Blumenerde im Verhältnis 1 Volumenteil Bodenhilfsstoff zu 3 Volumenteilen Blumenerde zu einem Substrat ("Blumenerde-Substrat") gemischt. Zum anderen wurde der Bodenhilfsstoff mit einem Grüngutkompost im Verhältnis 1 Volumenteil Bodenhilfsstoff zu 3 Volumenteilen Grüngutkompost zu einem Substrat ("Grüngutkompost-Substrat") gemischt.

Anschließend wurden Jungpflanzen von Tomaten (Sorte: Saunoa) in das Blumenerde-Substrat und Jungpflanzen von Rosmarin (Sorte: Verino) in das Grüngutkompost-Substrat getopft und die Tomaten anschließend für 6 Wochen und der Rosmarin für 12 Wochen im Gewächshaus kultiviert. Während dieser Zeit wurden die Pflanzen von oben bewässert und erhielten nach dem Einwurzeln eine Bewässerungsdüngung mit einem Volldünger im Anstauverfahren. Nach dieser Kultivierung im Gewächshaus wurden die Tomaten und der Rosmarin in größere Container gepflanzt und in einem ungeheizten Folienhaus für weitere 17 Wochen weiterkultiviert. Dafür wurden die Substrate noch einmal in der gleichen Zusammensetzung gemischt und die Pflanzen in das entsprechende Substrat neu getopft. Am Ende der Versuche wurde die oberirdische Frischmasse der Pflanzen gemessen.

Danach wurde für die Tomaten eine mittlere Frischmasse von 108,3 Gramm pro Topf und für den Rosmarin eine mittlere Frischmasse von 38,9 Gramm pro Topf gemessen.

### Vergleichsversuch

Zu Vergleichszwecken wurde ein nicht-erfindungsgemäßer Bodenhilfsstoff hergestellt.

Hierzu wurden Körner aus geblähtem Perlit, die dem Ausführungsbeispiel entsprachen, mit einer wässrigen Lösung von Leonardit, die ebenfalls dem Ausführungsbeispiel entsprach, besprüht. Hierdurch konnte eine Konzentration der Huminsäure von etwa 2,0 Masse-%, bezogen auf die Masse der Körner aus geblähtem Perlit, die entsprechend mit Huminsäure beschichtet waren, erreicht werden.

Der entsprechend beschichtete, geblähte Perlit wurde gemäß dem Ausführungsbeispiel ebenfalls auf einen Filter gelegt und in gleicher Weise mit Wasser beaufschlagt. Schon nach wenigen Tropfen erschienen die Körner deutlich heller und wiesen nach Beendigung der Beaufschlagung mit Wasser praktisch keinerlei Färbung mehr auf, was die vollständige Auswaschung der Beschichtung aus Huminsäure indizierte. Die Färbung des erfindungsgemäß beschichteten, geblähten Perlits erwies sich damit als wesentlich dauerhafter.

Der gemäß dem Vergleichsbeispiel erhaltene, beschichtete geblähte Perlit wurde anschließend gemäß dem Bodenhilfsstoff des Ausführungsbeispiels in entsprechenden Wachstumsversuchen verwendet. Danach konnte für die Tomaten eine mittlere Frischmasse von 101,5 Gramm pro Topf und für den Rosmarin eine mittlere Frischmasse von 31,1 Gramm pro Topf gemessen werden.

Danach konnte mit dem erfindungsgemäßen Bodenhilfsstoff gegenüber dem nichterfindungsgemäß beschichteten Perlit bei den Tomaten eine um etwa 6,7% erhöhte Frischmasse und bei dem Rosmarin eine um etwa 25,1% erhöhte Frischmasse erzielt werden.

## Patentansprüche

1. Bodenhilfsstoff, umfassend die folgenden Merkmale:
1.1 Körner aus geblähtem Perlit;
1.2 die Körner aus geblähtem Perlit umfassen Körner aus geblähtem Perlit, die mit Huminsäure beschichtet sind;
1.3 die mit Huminsäure beschichteten Körner aus geblähtem Perlit umfassen Körner aus geblähtem Perlit, die in hoher Konzentration mit Huminsäure beschichtet sind, und bei denen die Huminsäure
1.3.1 die Oberfläche der Körner aus geblähtem Perlit vollständig bedeckt; und
1.3.2 in einer Konzentration von wenigstens 3 Masse-% vorliegt, bezogen auf die Masse der Körner aus geblähtem Perlit, die in hoher Konzentration mit Huminsäure beschichtet sind.

2. Bodenhilfsstoff nach Anspruch 1, wobei die Huminsäure in einer Konzentration von wenigstens 5 Masse-% vorliegt, bezogen auf die Masse der Körner aus geblähtem Perlit, die in hoher Konzentration mit Huminsäure beschichtet sind.

3. Bodenhilfsstoff nach wenigstens einem der vorhergehenden Ansprüche, wobei die Huminsäure in einer Konzentration im Bereich von 3 bis 30 Masse-% vorliegt, bezogen auf die Masse der Körner aus geblähtem Perlit, die in hoher Konzentration mit Huminsäure beschichtet sind.

4. Bodenhilfsstoff nach wenigstens einem der vorhergehenden Ansprüche, wobei die Huminsäure in einer Konzentration im Bereich von 5 bis 20 Masse-% vorliegt, bezogen auf die Masse der Körner aus geblähtem Perlit, die in hoher Konzentration mit Huminsäure beschichtet sind.

5. Bodenhilfsstoff nach wenigstens einem der vorhergehenden Ansprüche mit Huminsäure auf Basis von Leonardit.

6. Bodenhilfsstoff nach wenigstens einem der vorhergehenden Ansprüche mit wasserlöslicher Huminsäure.

7. Bodenhilfsstoff nach wenigstens einem der vorhergehenden Ansprüche, wobei wenigstens 90 Masse-% der Körner aus geblähtem Perlit, die in hoher Konzentration mit Huminsäure beschichtet sind, in einer Korngröße unter 6 mm vorliegen.

8. Bodenhilfsstoff nach wenigstens einem der vorhergehenden Ansprüche, wobei die Körner aus geblähtem Perlit, die in hoher Konzentration mit Huminsäure beschichtet sind, zu wenigstens 90 Masse-% in einer Korngröße zwischen 0,5 mm und 6 mm vorliegen, bezogen auf die Masse der Körner aus geblähtem Perlit, die in hoher Konzentration mit Huminsäure beschichtet sind.

9. Verwendung des Bodenhilfsstoffs nach wenigstens einem der vorhergehenden Ansprüche als Substrat.

10. Substrat, umfassend einen Bodenhilfsstoffs nach wenigstens einem der Ansprüche 1 bis 8.

11. Verfahren zur Herstellung des Bodenhilfsstoffs nach wenigstens einem der Ansprüche 1 bis 8, umfassend die folgenden Schritte:
A. Zur Verfügungstellung von Körnern aus geblähtem Perlit;
B. zur Verfügungstellung eines Behälters zur Aufnahme einer Flüssigkeit;
C. zur Verfügungstellung einer Huminsäure umfassenden Flüssigkeit in dem Behälter;
D. Einführen der Körner aus geblähtem Perlit in die Flüssigkeit;
E. Verweilenlassen der Körner aus geblähtem Perlit in der Flüssigkeit;
F. Ausführen der der Körner aus geblähtem Perlit aus der Flüssigkeit.

12. Verfahren nach Anspruch 11, wobei die Flüssigkeit in Form einer wässrigen Lösung von Huminsäure vorliegt.

13. Verfahren nach wenigstens einem der Ansprüche 11 bis 12, wobei die Körner aus geblähtem Perlit während des Verweilenlassens in der Flüssigkeit vollständig in die Flüssigkeit eingetaucht sind.

14. Verfahren nach wenigstens einem der Ansprüche 11 bis 13, wobei die Körner aus geblähtem Perlit während des Verweilenlassens in der Flüssigkeit in der Flüssigkeit bewegt werden.

15. Verfahren nach wenigstens einem der Ansprüche 11 bis 12, wobei die Körner aus geblähtem Perlit nach dem Ausführen der Körner aus geblähtem Perlit aus der Flüssigkeit getrocknet werden.

## Geänderte Patentansprüche

### Geänderte Patentansprüche gemäss Regel 137(2) EPÜ.

1. Bodenhilfsstoff, umfassend die folgenden Merkmale:
1.1 Körner aus geblähtem Perlit;
1.2 die Körner aus geblähtem Perlit umfassen Körner aus geblähtem Perlit, die mit Huminsäure beschichtet sind;
1.3 die mit Huminsäure beschichteten Körner aus geblähtem Perlit umfassen Körner aus geblähtem Perlit, die in hoher Konzentration mit Huminsäure beschichtet sind, und bei denen die Huminsäure
1.3.1 die Oberfläche der Körner aus geblähtem Perlit vollständig bedeckt; und
1.3.2 in einer Konzentration im Bereich von 3 bis 30 Masse-% vorliegt, bezogen auf die Masse der Körner aus geblähtem Perlit, die in hoher Konzentration mit Huminsäure beschichtet sind.

2. Bodenhilfsstoff nach Anspruch 1, wobei die Huminsäure in einer Konzentration von wenigstens 5 Masse-% vorliegt, bezogen auf die Masse der Körner aus geblähtem Perlit, die in hoher Konzentration mit Huminsäure beschichtet sind.

3. Bodenhilfsstoff nach wenigstens einem der vorhergehenden Ansprüche, wobei die Huminsäure in einer Konzentration im Bereich von 5 bis 20 Masse-% vorliegt, bezogen auf die Masse der Körner aus geblähtem Perlit, die in hoher Konzentration mit Huminsäure beschichtet sind.

4. Bodenhilfsstoff nach wenigstens einem der vorhergehenden Ansprüche mit Huminsäure auf Basis von Leonardit.

5. Bodenhilfsstoff nach wenigstens einem der vorhergehenden Ansprüche mit wasserlöslicher Huminsäure.

6. Bodenhilfsstoff nach wenigstens einem der vorhergehenden Ansprüche, wobei wenigstens 90 Masse-% der Körner aus geblähtem Perlit, die in hoher Konzentration mit Huminsäure beschichtet sind, in einer Korngröße unter 6 mm vorliegen.

7. Bodenhilfsstoff nach wenigstens einem der vorhergehenden Ansprüche, wobei die Körner aus geblähtem Perlit, die in hoher Konzentration mit Huminsäure beschichtet sind, zu wenigstens 90 Masse-% in einer Korngröße zwischen 0,5 mm und 6 mm vorliegen, bezogen auf die Masse der Körner aus geblähtem Perlit, die in hoher Konzentration mit Huminsäure beschichtet sind.

8. Verwendung des Bodenhilfsstoffs nach wenigstens einem der vorhergehenden Ansprüche als Substrat.

9. Substrat, umfassend einen Bodenhilfsstoffs nach wenigstens einem der Ansprüche 1 bis 7.

10. Verfahren zur Herstellung des Bodenhilfsstoffs nach wenigstens einem der Ansprüche 1 bis 7, umfassend die folgenden Schritte:
A. Zur Verfügungstellung von Körnern aus geblähtem Perlit;
B. zur Verfügungstellung eines Behälters zur Aufnahme einer Flüssigkeit;
C. zur Verfügungstellung einer Huminsäure umfassenden Flüssigkeit in dem Behälter;
D. Einführen der Körner aus geblähtem Perlit in die Flüssigkeit;
E. Verweilenlassen der Körner aus geblähtem Perlit in der Flüssigkeit;
F. Ausführen der der Körner aus geblähtem Perlit aus der Flüssigkeit.

11. Verfahren nach Anspruch 10, wobei die Flüssigkeit in Form einer wässrigen Lösung von Huminsäure vorliegt.

12. Verfahren nach wenigstens einem der Ansprüche 10 bis 11, wobei die Körner aus geblähtem Perlit während des Verweilenlassens in der Flüssigkeit vollständig in die Flüssigkeit eingetaucht sind.

13. Verfahren nach wenigstens einem der Ansprüche 10 bis 12, wobei die Körner aus geblähtem Perlit während des Verweilenlassens in der Flüssigkeit in der Flüssigkeit bewegt werden.

14. Verfahren nach wenigstens einem der Ansprüche 10 bis 11, wobei die Körner aus geblähtem Perlit nach dem Ausführen der Körner aus geblähtem Perlit aus der Flüssigkeit getrocknet werden.
